# EUROPÄISCHE PATENTSCHRIFT

(11) **EP 0 994 048 B1**
(45) Veröffentlichungstag und Bekanntmachung des Hinweises auf die Patenterteilung: **21.11.2001**
(21) Anmeldenummer: 99115749.6
(22) Anmeldetag: 13.05.1998
(51) Int. Cl.: B65G 17/06, B65G 17/34

(54) **Gliederförderer**
Link conveyor
Transporteur à palettes

(43) Veröffentlichungstag der Anmeldung: 19.04.2000
(62) Teilanmeldung aus: 98108672.1
(73) Patentinhaber: Beumer Maschinenfabrik GmbH & Co. KG, 59269 Beckum (DE)
(72) Erfinder: Pölling, Ludger, 59329 Wadersloh (DE)
(74) Vertreter: Hoormann, Walter, Dr.-Ing.

(56) Entgegenhaltungen:
- EP-A- 0 664 262
- EP-A- 0 753 474
- FR-A- 2 304 413
- US-A- 3 913 726

## Beschreibung

Die Erfindung betrifft einen Stückgut-Gliederförderer nach dem Oberbegriff des Anspruches 1, der insb. zum Sortieren von Stückgutteilen bestimmt und geeignet ist, die an einer Aufgabestelle jeweils einzeln auf eine Tragplatte aufgegeben werden, und an einer vorgegebenen Abgabestelle von mehreren zur Verfügung stehenden Abgabestellen durch seitliches Kippen der Tragplatte wieder abgegeben werden.

Derartige auch als Sorter bezeichnete Förderer sind in unterschiedlichster Ausgestaltung bekannt (s. z. B. FR-A-2 304 413, EP-A-0 753 474), wobei die Tragplatten als auch die Stützeinrichtungen erheblichen Biegemomenten unterworfen werden, wenn eine Tragplatte mit einem relativ schweren Stückgutteil beaufschlagt wird, welches i. a. mittig auf eine Tragplatte aufgegeben wird, so daß zur Erzielung der erforderlichen Festigkeit ein entsprechender Aufwand getroffen werden muß. Dieser wird bei Tragplatten mit Tragplattenabschnitten, die als Kragträger jeweils von einem oberen Stützabschnitt einer Stützeinrichtung vorstehen, noch vergrößert, wenn diese Tragplattenabschnitte einander benachbarter Tragplatten einander überlappen und wenigstens im Überlappungsbereich so flexibel bzw. elastisch ausgebildet sind, daß sie sich beim Durchfahren von vertikal gekrümmten Förderbahnabschnitten, die zwischen einem horizontalen und einem schräg zur Horizontalen verlaufenden Förderbahnabschnitt vorhanden sein können, ohne Blockierung und/oder Beschädigung verformen können.

Der vorliegenden Erfindung liegt die Aufgabe zugrunde, einen gattungsgemäßen Gliederförderer zu schaffen, der sich durch eine besonders zweckmäßige Ausgestaltung seiner Tragplatten gegenüber dem Stand der Technik auszeichnet.

Die Lösung dieser Aufgabe erfolgt durch die kennzeichnenden Merkmale des Anspruches 1.

Dadurch, daß die Tragplatten aus einem harten Hohlkörper (vorzugsweise aus GFK) bestehen, dessen Hohlraum bevorzugt mit Polystyrolschaum od. dgl. gefüllt sein kann, ergeben sich gegenüber dem Stand der Technik ganz erhebliche Vorteile, da selbst sehr große Tragplatten sehr leicht, aber dennoch sehr widerstandsfähig sind. Dabei hat sich eine Rippung o. ä. der Tragfläche als sehr zweckmäßig erwiesen, damit es bei Niederschlägen, Kondensatbildung od. dgl. an den Tragflächen nicht zu Adhäsionskräften zum Stückgut kommt, welche den Arbeitsablauf behindern können.

Bevorzugte Ausgestaltungen der vorliegenden Erfindung sind in den Unteransprüchen beschrieben.

Die Erfindung wird nachstehend an Ausführungsbeispielen unter Bezugnahme auf eine vereinfachte Zeichnung weiter erläutert. Es zeigt:
- **Fig. 1:**: Eine seitliche Draufsicht auf einen Längsabschnitt eines erfindungsgemäßen Kipp-Sorters, wobei diverse Teile (z.B. die Abstützung und Führung der Stützkette) fortgelassen worden sind;
- **Fig. 1a:**: einen vergrößerten Ausschnitt aus Fig. 1;
- **Fig. 2:**: den in Fig. 1a mit einem strichpunktierten Kreis II umrandeten Ausschnitt in vergrößerter Darstellung;
- **Fig. 3:**: eine stark vereinfachte Teildraufsicht auf den Sorter gem. Fig. 1 im Bereich einer Horizontalkurve;
- **Fig. 4a, b:**: eine stark vergrößerte, teilweise vervollständigte Schnittansicht in Richtung der Schnittlinie IV-IV in Fig. 1a gesehen, wo bei Fig. 4a die horizontale Transportstellung und Fig. 4b die schräge Kippstellung einer Tragplatte zeigt;
- **Fig. 5:**: eine stark schematisierte, perspektivische Darstellung einiger Tragplatten mit ihren Stirnwänden;
- **Fig. 6:**: eine stark schematisierte Teildarstellung in einer Ansicht gem. Fig. 1, welche einen Abschnitt des Förderers beim Durchfahren von Vertikalkurven zeigt;
- **Fig. 7:**: eine vergrößerte Darstellung des in Fig. 1a mit einer strichpunktierten Linie VII umrandeten Bereichs, wobei der untere Tragplattenabschnitt mit einem Gelenk an seine Stirnwand angelenkt ist;
- **Fig. 7a:**: eine dem unteren Abschnitt von Fig. 7 entsprechende perspektivische Darstellung von zwei einander benachbarten Stirnwänden, von denen die eine mit einem fest angeordneten Schwenkbolzen versehen ist, der in einem Langloch der anderen Stirnwand geführt ist;
- **Fig. 7b:**: eine Fig. 7a entsprechende, etwas verkleinerte (und weitergehende) Teilansicht, bei welcher der Schwenkbolzen eine andere Relativstellung im Langloch der anderen Stirnwand einnimmt, und ein Teil der benachbarten Stützeinrichtung im nahezu gekippten Zustand zu sehen ist;
- **Fig. 8:**: eine Draufsicht auf eine bevorzugte andere Ausgestaltung eines erfindungsgemäßen Förderers mit horizontal gekrümmten Förderabschnitten, und zwar eine Draufsicht in Richtung des Pfeiles VIII in Fig. 9 auf eine mit ausgezogenen Linien dargestellte Tragplatte, sowie eine Teildraufsicht auf die sich hieran nach rechts anschließende Tragpltte (mit gestrichelten Linien dargestellt), die in Fig. 8 relativ zu der anderen Tragplatte in der Horizontalen verschwenkt ist;
- **Fig. 9:**: eine Schnittansicht durch die Tragplatten gem. Fig. 8 in Richtung der Schnittlinie IX-IX in Fig. 8 gesehen;
- **Fig. 10:**: einen Schnitt durch die Tragplatte gem. den Fig. 8 bzw. 9 in Richtung der Schnittlinie X-X in Fig. 8 gesehen;
- **Fig. 11:**: die in Fig. 10 mit einem strichpunktierten Kreis umrahmte Einzelheit XI in vergrößerter Darstellung;
- **Fig. 12:**: eine stark schematisierte Teildarstellung einer Variante, nämlich eine seitliche Teildraufsicht auf zwei einander benachbarte Förderelemente, die sich an einem nicht gekrümmten Abschnitt der Förderbahn befinden;
- **Fig. 13:**: den Förderstrangabschnitt gem. Fig. 12 im Bereich einer konvexen Vertikalkurve;
- **Fig. 14:**: den Förderstrangabschnitt gem. Fig. 12 im Bereich einer konkaven Vertikalkurve;
- **Fig. 15:**: eine Fig. 12 entsprechende Darstellung zwecks Zuordnung der nachfolgenden Fig. 16 und 17;
- **Fig. 16:**: einen Vertikalschnitt durch die Darstellung gem. Fig. 15 in Richtung der Schnittlinie XVI/XVII-XVI/XVII gesehen im Bereich einer konvexen Kurve;
- **Fig. 17:**: eine Fig. 16 entsprechende Darstellung im Bereich einer konkaven Kurve;
- **Fig. 18:**: eine den Fig. 12 bzw. 15 entsprechende Darstellung zwecks Zuordnung der nachfolgenden Fig. 19 und 20;
- **Fig. 19:**: einen Schnitt durch die Darstellung gem. Fig. 18 in Richtung der Schnittlinie XIX/XX-XIX/XX gesehen im Bereich einer konvexen Kurve;
- **Fig. 20:**: eine Fig. 19 entsprechende Darstellung im Bereich einer konkaven Kurve;
- **Fig. 21:**: einen Schnitt durch die Darstellung gem. Fig. 18 in Richtung der Schnittlinie XVI/XVII-XVI/XVII gesehen beim Kippen (in der Zeichnung nach rechts);
- **Fig. 22:**: eine den Darstellungen gem. Fig. 12 bzw. Fig. 15 bzw. Fig. 18 entsprechende Darstellung zwecks Zuordnung der nachfolgenden Darstellungen gem. den Fig. 23 und 24;
- **Fig. 23:**: einen Schnitt durch die Darstellung gem. Fig. 22 in Richtung der Schnittlinie XXIII/XXIV-XXIII/XXIV in Fig. 22 gesehen im Bereich eines geraden Förderstreckenabschnittes;
- **Fig. 24:**: eine Fig. 23 entsprechende Darstellung im Bereich einer Horizontalkurve; und
- **Fig. 25:**: eine weitere Variante in einer Fig. 12 entsprechenden Darstellung, wobei das Stützelement für den zugeordneten Gleitschuh jeweils nicht an der Stützeinrichtung abgestützt, sondern direkt zum darunter liegenden Kettenelement heruntergeführt ist bzw. sich von dort aus nach oben erstreckt.

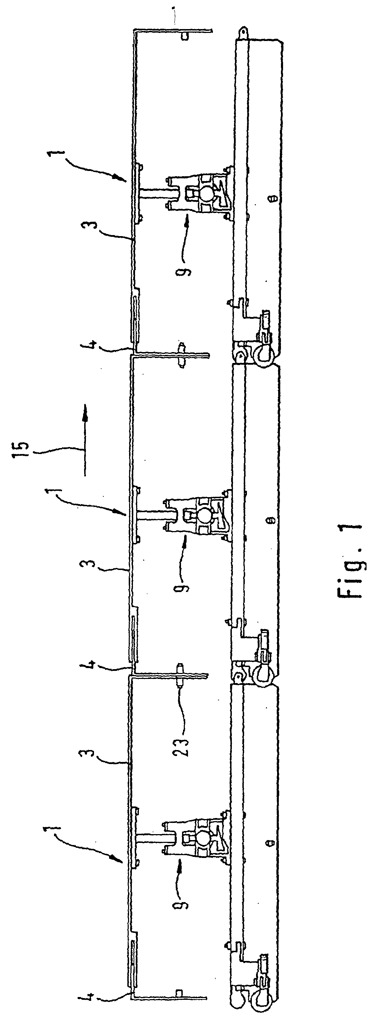

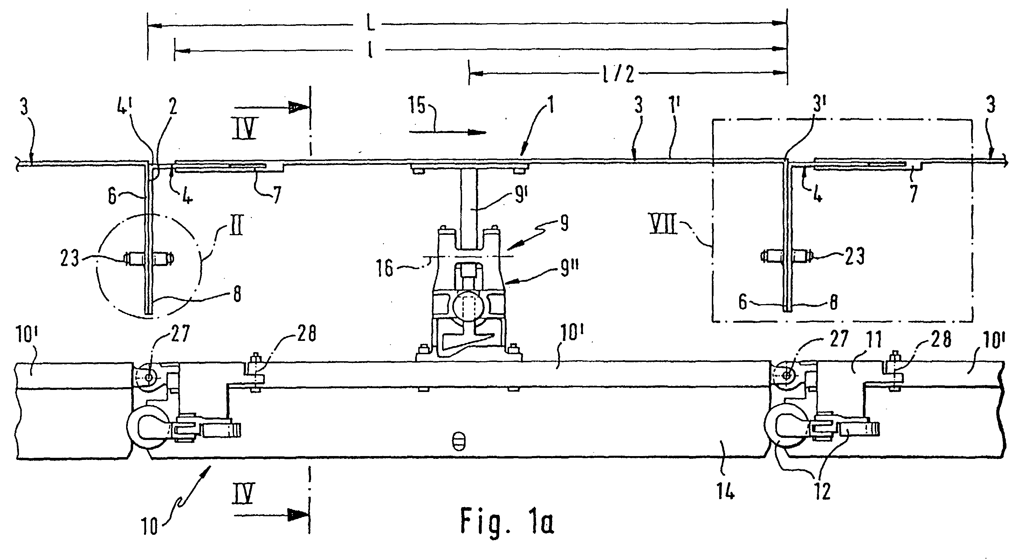

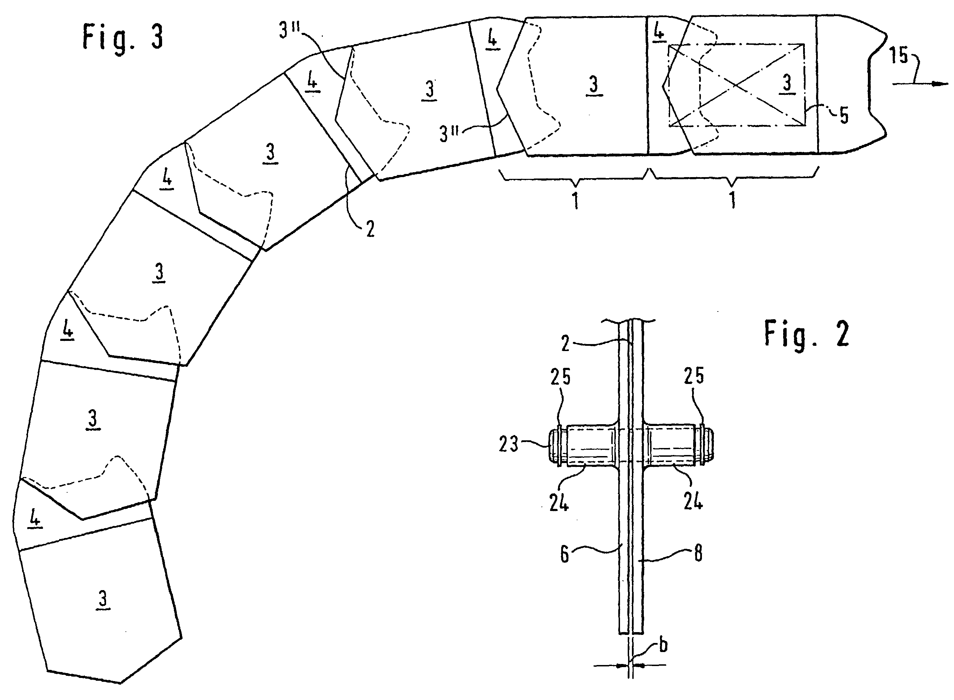

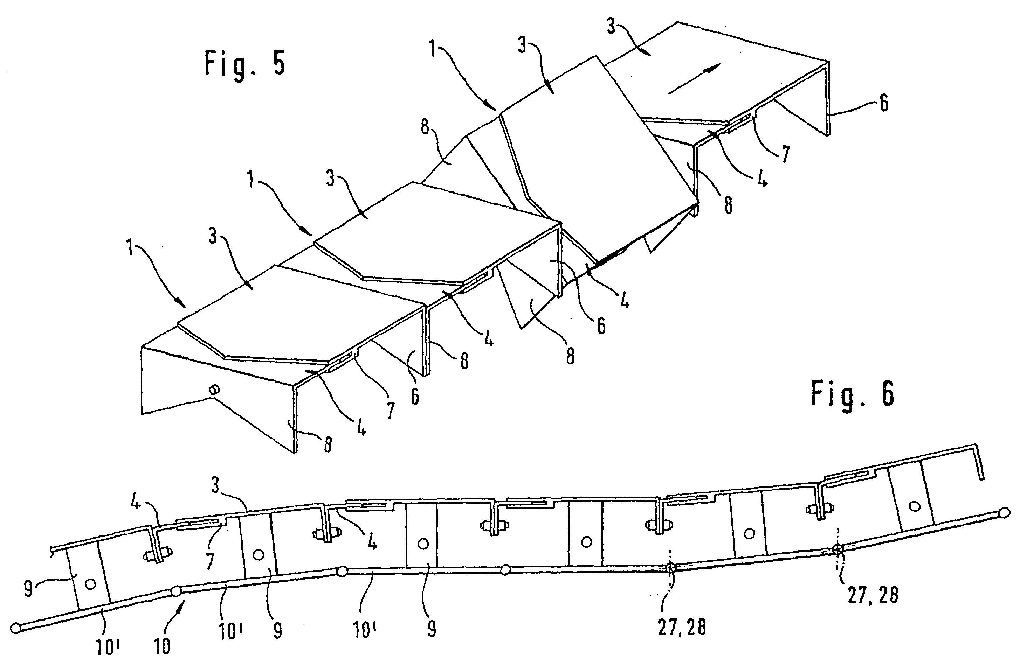

Die Fig. 1 und 1a zeigen in einer vereinfachten Seitenansicht einen Abschnitt eines Stückgut-Gliederförderers zum Sortieren von Stückgutteilen, der längs einer in sich geschlossenen Förderbahn umläuft, die horizontale Abschnitte (s. z.B. Fig. 1, 1a) und schräg zur Horizontalen verlaufende Abschnitte (siehe z.B. Fig. 6) aufweist. Da die Förderbahn endlos ist, weist der Förderer horizontal gekrümmte Abschnitte (Horizontalkurven) auf (s. z.B. Fig. 3).

Das Fördertrum besteht aus einer Vielzahl von (in der Draufsicht) rechteckigen Tragplatten 1, die jeweils unter Bildung einer sehr schmalen Trennfuge 2 einer Breite b von lediglich 2 mm eng benachbart hintereinander angeordnet sind. Um dennoch ein Durchfahren der Horizontalkurven zu ermöglichen, bestehen die Tragplatten 1 jeweils aus zwei parallelen, einander teilweise überlappenden Tragplattenabschnitten 3, 4. Der obere Tragplattenabschnitt 3 jeder Tragplatte 1 besteht aus einer biegesteifen Platte (also einem plattenförmigen Element, welches sich bei Beaufschlagung mit einem Stückgutteil senkrecht zur Tragfläche praktisch nicht verformt). Ihre Länge l ist nur etwas kleiner als die Gesamtlänge L einer Tragplatte 1, so daß ein Stückgutteil 5, welches an einer nicht dargestellten Aufgabestelle auf eine Tragplatte 1 aufgegeben wird, praktisch nur vom oberen Tragplattenabschnitt 3 abgestützt ist.

Der obere Tragplattenabschnitt 3 jeder Tragplatte 1 ist an seinem vorderen Rand 3' mit einer von der Tragfläche 1' senkrecht nach unten gerichteten Stirnwand 6 versehen und an seinem hinteren Endabschnitt mit einer an seiner Unterseite ausgebildeten, schlitzförmigen Führung 7, in welcher der untere Tragplattenabschnitt 4 der Tragplatte 1 so geführt ist, daß er sich beim Durchfahren von Horizontalkurven relativ zum oberen Tragplattenabschnitt 3 verschwenken kann (s. Fig. 3). Der untere Tragplattenabschnitt 4 ist an seinem hinteren Rand 4' mit einer von der Tragfläche 1' senkrecht nach unten gerichteten Stirnwand 8 versehen.

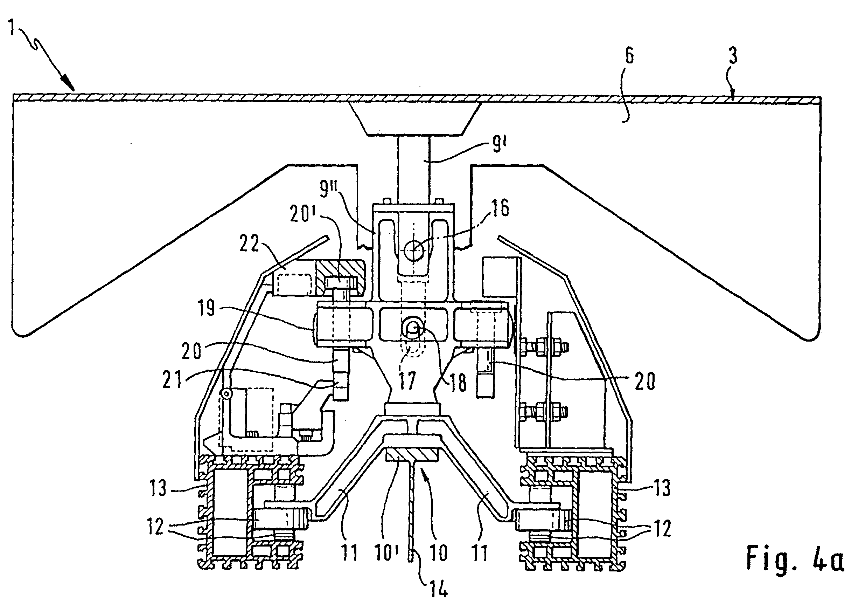

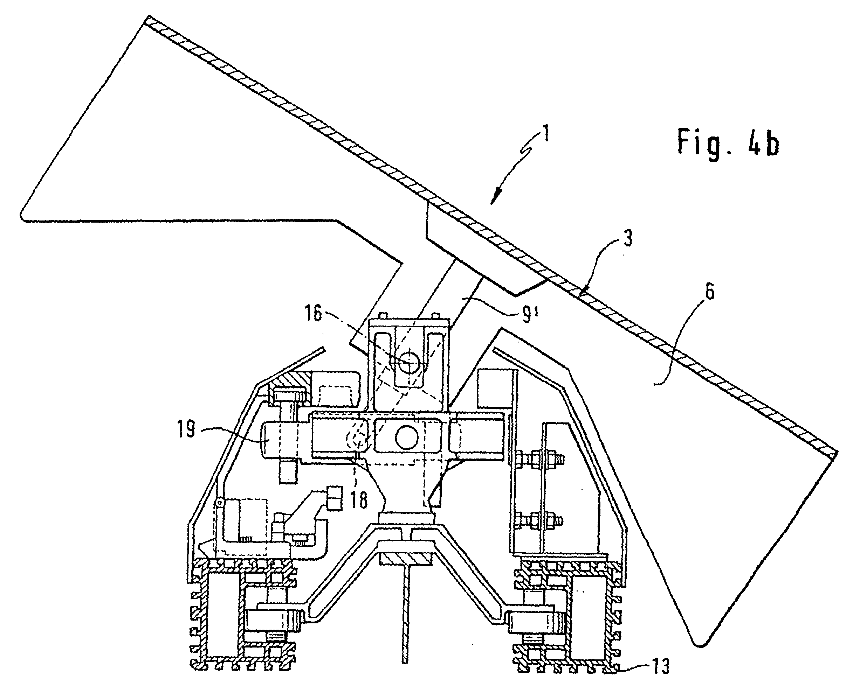

Der obere Tragplattenabschnitt 3 jeder Tragplatte 1 ist mit Abstand 1/2 zu seiner Stirnwand 6 mittels einer Stützeinrichtung 9 an einem Glied 10' einer Stützkette 10 abgestützt, die über in den Fig. 1, 1a nicht dargestellte Arme 11 und Rollen 12 an ortsfesten Führungsschienen 13 abgestützt ist (s. Fig. 4a, b) und mittels eines Linearmotors antreibbar ist, von dem in den Fig. 4a, b nur das sog. Schwert 14 erkennbar ist.

Die Stützeinrichtungen 9 weisen jeweils einen von der Unterseite eines oberen Tragplattenabschnittes 3 senkrecht nach unten vorstehenden oberen Stützabschnitt 9' sowie einen von dem betreffenden Glied 10' der Stützkette 10 senkrecht nach oben vorstehenden unteren Stützabschnitt 9" auf, die über eine in Förderrichtung 15 gerichtete Kippachse 16 gelenkig miteinander verbunden sind, welche am unteren Stützabschnitt 9" abgestützt ist.

Der mittig an der Unterseite jedes oberen Tragplattenabschnittes 3 befestigte obere Stützabschnitt 9' ist i.w. stangenförmig ausgebildet und erstreckt sich über die Kippachse 16 hinaus nach unten, wo er mit einem Langloch 17 versehen ist, in welches ein parallel zur Kippachse 16 verlaufender Zapfen 18 greift, welcher sich durch eine Traverse 19 erstreckt, die am unteren Stützabschnitt 9" quer zur Förderrichtung 15 verschieblich gelagert und geführt ist. Die Traverse 19 ist im normalen Förderzustand (Fig. 1, 1a, 4a) durch Kopfbolzen 20 am unteren Stützabschnitt 9" verriegelt, wobei die Kopfbolzen 20 abgesenkt sind, wie dieses im rechten Teil von Fig. 4a erkennbar ist.

Zum Entriegeln und anschließendem seitlichen Kippen einer Tragplatte 1 wird ein an der betreffende Abgabestelle ortsfest angeordneter Nocken 21 aus einer zuvor abgesenkten Stellung so hochgeschwenkt, daß ein Kopfbolzen 20 mit seinem unteren Ende auf den Nocken 21 aufläuft und ihn unter gleichzeitiger Entriegelung der betreffenden Traverse 19 anhebt. Dabei gelangt der Kopf 20' dieses Kopfbolzens 20 in eine an der Abgabestelle ortsfest angeordnete, in Förderrichtung 15 nach außen gekrümmte Weiche 22 (s. linker Teil von Fig. 4a) und wird von dieser seitlich nach außen geführt, wobei der Kopfbolzen 20 die Traverse 19 aus ihrer Mittelstellung (Fig. 4a) seitlich bewegt (Fig. 4b), die dabei ihrerseits über den Zapfen 18 den oberen Stützabschnitt 9' und damit die Tragplatte 1 in die Schrägstellung gem. Fig. 4b um die Kippachse 16 kippt. Das Zurückkippen der Tragplatte 1 in die horizontale Förderstellung gem. Fig. 4a erfolgt selbsttätig durch entsprechende Ausbildung der Weiche 22, wobei sich der Kopfbolzen 20 schließlich wieder in seine Verriegelungsstellung absenkt.

Bezüglich weiterer Einzelheiten dieses an sich bekannten Verriegelungs- und Kippmechanismus' wird z.B. auf die EP 0 664 262 A1 verwiesen.

Aus Fig. 5 ist die Wirkungsweise der Stirnwände 6, 8 erkennbar: Wenn eine Tragplatte 1 gekippt wird/ist, schließen sie den unterhalb der Tragplatte 1 befindlichen Raum stirnseitig jeweils bündig zu den benachbarten nicht gekippten Tragplatten 1 ab, so daß von dort aus kein Stückgut unter die gekippte Tragplatte 1 gelangen kann. Außerdem bilden sie für den nicht mit einer Stützeinrichtung 9 an der Stützkette 10 abgestützten unteren Tragplattenabschnitte 4 einer Tragplatte 1 ein Lager für einen zur Kippachse 16 fluchtenden Schwenkbolzen 23 (s. insb. Fig. 2). Hierfür ist an jeder Stirnwand 6, 8 ein buchsenförmiger Ansatz 24 ausgebildet, der zu dem Ansatz 24 der benachbarten Stirnwand fluchtet, so daß jeweils ein Schwenkbolzen 23 eingesteckt und an seinen über die Ansätze 24 vorstehenden Enden mit Sicherungsringen 25 gegen ein Herausgleiten gesichert werden kann.

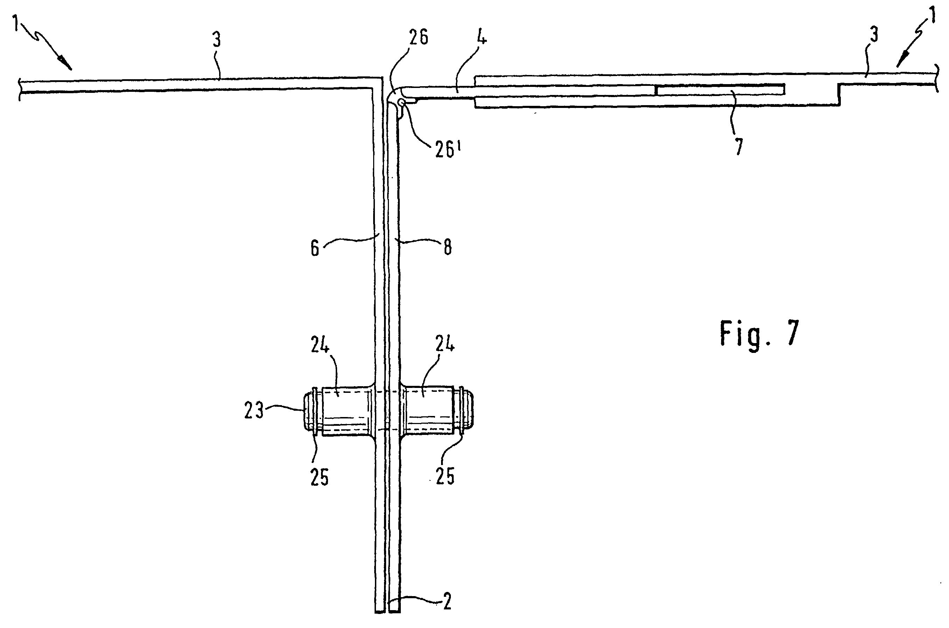

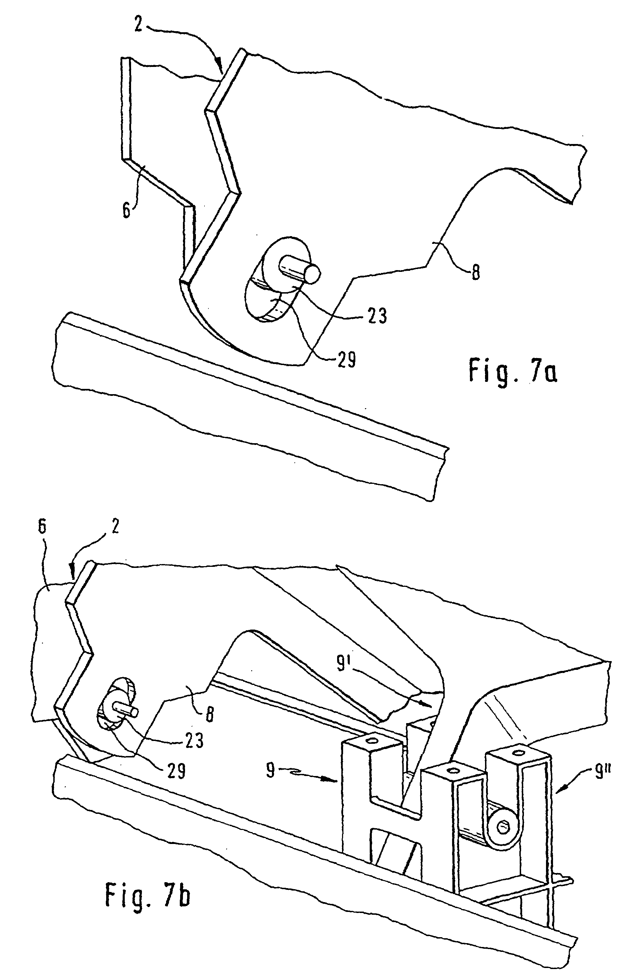

Der untere Tragplattenabschnitt 4 jeder Tragplatte 1 ist als ebene Platte ausgebildet und bildet einen Schenkel eines L-förmigen Elementes, dessen anderer Schenkel seine Stirnwand 8 bildet. Da der untere Tragplattenabschnitt 4 durch die Gewichtskraft eines auf die betreffende Tragplatte 1 aufgegebenen Stückgutteils praktisch nicht belastet ist, kann er relativ dünn und ggf. auch so flexibel ausgebildet werden, daß er sich beim Durchfahren von Vertikalkurven elastisch verformen kann, wie dieses in Fig. 6 stark schematisiert gezeigt ist. Da das beim Kippen einer Tragplatte 1 ihrem oberen Tragplattenabschnitt 3 eingeprägte Kippmoment von diesem im Bereich der Führung 7 auf den unteren Tragplattenabschnitt 4 übertragen werden muß, ist es an sich zweckmäßiger, den unteren Tragplattenabschnitt 4 als starre Platte auszubilden. Dieses ist auch durchaus möglich, wenn der untere Tragplattenabschnitt 4 mit seiner Stirnwand 8 über ein Gelenk 26 verbunden ist, dessen Schwenkachse 26' parallel und benachbart zum hinteren Rand der Tragplatte 1 verläuft, wie dieses in Fig. 7 dargestellt ist.

Da der obere Tragplattenabschnitt 3 sich i.w. über die gesamte Länge L jeder Tragplatte 1 erstreckt und mithin dem oberen Tragplattenabschnitt 3 der benachbarten Tragplatte 1 nah benachbart ist, ist er jeweils an seinem hinteren Rand 3" von der Mitte aus zu den Längsrändern so abgeschrägt, daß es beim Durchfahren von Horizontalkurven nicht zu einer Kollision zwischen einander benachbarten oberen Tragplattenabschnitten 3 kommen kann, wie dieses aus Fig. 3 erkennbar ist.

Es sei noch nachgetragen, daß die Glieder 10' der Stützkette 10 jeweils über horizontale Schwenkachsen 27 und vertikale Schwenkachsen 28 miteinander verbunden sind, die ein Durchfahren von Vertikal- bzw. Horizontalkurven ermöglichen, wobei die Schwenkachsen 27, 28 jeweils benachbart zueinander angeordnet sind, ihre konstruktive Ausbildung allerdings nicht im einzelnen dargestellt ist, da sie für die vorliegende Erfindung unerheblich (und im übrigen auch bekannt) ist, da diese auf die Ausbildung der Tragplatten 1 bzw. ihrer Tragplattenabschnitte 3, 4 und deren Abstützung an der Stützkette 10 abstellt. Es ist ohne weiteres erkennbar, daß der vorstehend an einem Ausführungsbeispiel weiter erläuterte erfindungsgemäße Förderer gegenüber dem Stand der Technik schon deswegen erheblich vereinfacht ist, weil man - wie bei konventionellen Sortem - mit nur einer Stützeinrichtung 9 je Tragplatte 1 auskommt und durch ihre - vorzugsweise mittige - Anordnung mit Abstand zu den Stirnwänden 6, 8 nicht nur konventionelle Stützeinrichtungen 9 mit integrierter Kippeinrichtung verwenden kann, sondern auch zu einer sehr einfachen Ausbildung der Tragplattenabschnitte 3, 4 kommt. Dieses gilt sowohl für den von der Stützeinrichtung 9 abgestützten oberen Tragplattenabschnitt 3 als insb. auch für den praktisch unbelasteten unteren Tragplattenabschnitt 4, der nicht an der Stützkette 10 abgestützt zu werden braucht, da das Gewicht eines auf den biegesteifen oberen Tragplattenabschnitt 3 aufgegebenen Stückgutteils 5 von diesem abgefangen und in statisch günstiger Weise auf die Stützkette 10 übertragen wird. Trotz all dieser erheblichen Vereinfachungen kann es weder an der Tragfläche noch auch zwischen einer gekippten Tragplatte 1 und einer benachbarten nicht gekippten Tragplatte 1 nicht zu einer Verkeilung mit Stückgut kommen.

Fig. 7a zeigt in einer perspektivischen Teildarstellung eine Variante der Ausbildung gem. Fig. 7, die sich von letzterer insb. wie folgt unterscheidet: Der an der Stirnwand 6 befestigte Schwenkbolzen 23 ist in einem Langloch der Stirnwand 8 geführt, und zwar insb. deshalb, um die Verwendung von Stützeinrichtungen 9 (s. Fig. 7b im Ausschnitt) gem. der EP 0 664 262 A1 o.ä. zu ermöglichen, bei denen die Tragplatte 1 beim Kippen jeweils abgesenkt wird, um eine besonders schonende Stückgutabgabe zu erwirken, wie in der vorgenannten Druckschrift im einzelnen ausgeführt ist.

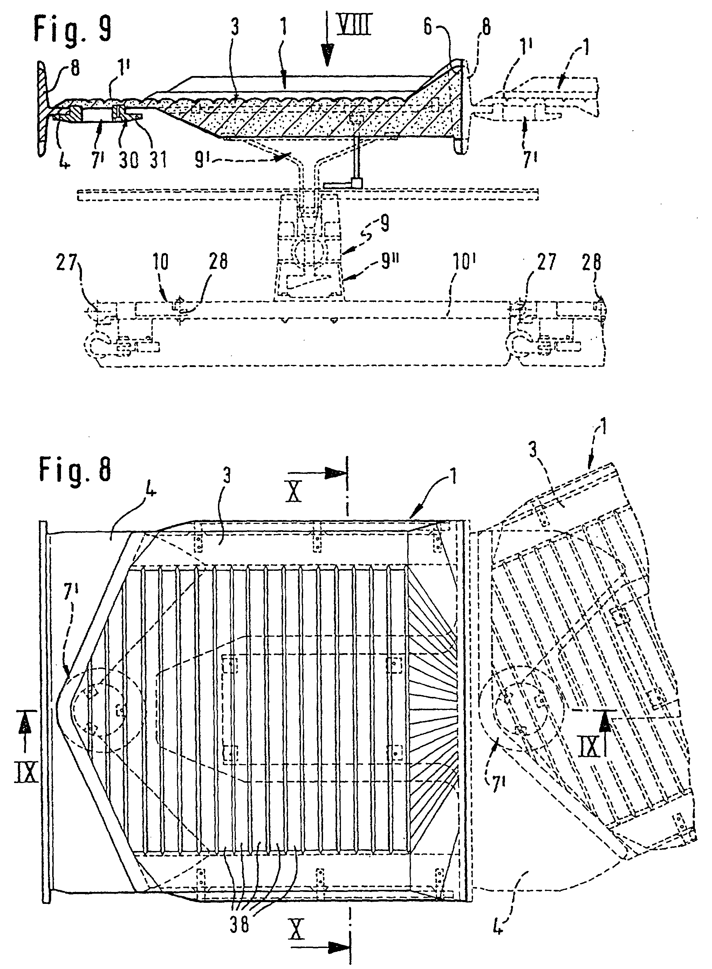

Die Fig. 8 bis 11 zeigen eine höchst bevorzugte Variante am Beispiel einer (mit ausgezogenen Linien dargestellten) Tragplatte 1 (sowie einer Teildarstellung einer sich hieran anschließenden, mit gestrichelten Linien dargestellten Tragplatte 1, die in der Darstellung gem. Fig. 8 relativ zu der ihr benachbarten Tragplatte 1 in der Horizontalen verschwenkt ist), wobei sich diese Variante in vielfältiger Weise von den bisher dargestellten und beschriebenen Ausführungsbeispielen unterscheidet.

Zwar sind die Tragplatten 1 ebenfalls an ihrem vorderen und rückwärtigen Rand mit Stirnwänden 6 bzw. 8 versehen, diese erstrecken sich jedoch jeweils nicht nur von einer Tragplatte 1 nach unten sondern auch nach oben, und sind auch nicht mittels eines durch die Stirnwände 6, 8 geführten Schwenkbolzens 23 gelenkig miteinander verbunden. Vielmehr besitzt jede Tragplatte 1 bei dieser Ausgestaltung ein Gleit- und Gelenkelement 7', welches mittig an dem dem unteren Tragplattenabschnitt 4 zugekehrten Endabschnitt des oberen Tragplattenabschnittes 3 angeordnet ist und den unteren Tragplattenabschnitt 4 mit einem auf einem nicht um eine Horizontalachse gekrümmten Förderabschnitt i.w. senkrechten Schwenkbolzen 30 durchsetzt, wobei am freien unteren Ende des Schwenkbolzens 30 ein Flansch 31 vorhanden ist, und der Abstand a zwischen der Unterseite des oberen Tragplattenabschnittes 3 und der Oberseite des Flansches 31 etwa gleich der Dicke s des unteren Tragplattenabschnittes 4 im Überlappungsbereich ist, so daß der untere Tragplattenabschnitt 4 "sandwichartig" zwischen den vorgenannten Elementen angeordnet und geführt und gehalten ist, sich dabei aber um den Schwenkbolzen 30 drehen kann, wie dieses insb. aus Fig. 8 deutlich erkennbar ist.

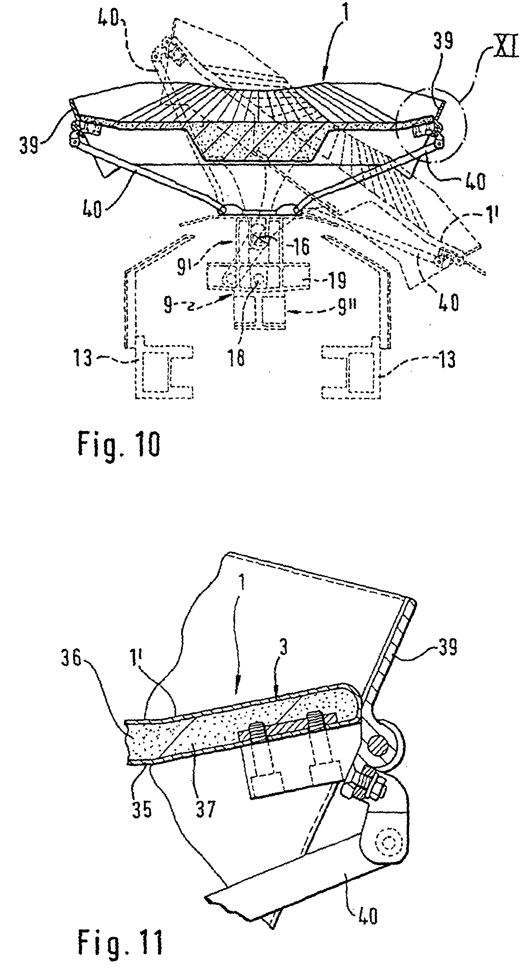

Weiterhin sei darauf verwiesen, daß an den Längsrändern der Tragplatte 1 jeweils hochstehende Seitenborde 39 angeordnet sind, die in der in den Fig. 10 und 11 dargestellten Weise im normalen Transportzustand schräg nach oben stehen, und die beim Kippen (s. gestrichelte Darstellung in Fig. 10) über Lenker 40 an der Kippseite jeweils selbsttätig so weit nach außen geschwenkt werden, daß sie i.w. zu dem ihnen jeweils benachbarten Randabschnitt der Tragfläche 1' im gekippten Zustand fluchten. Offenkundiger Sinn und Zweck dieser Maßnahme und deren Ausgestaltung sind in der DE-OS 19 721 850 eingehend dargestellt und beschrieben, so daß hier weitere diesbezügliche Ausführungen entbehrlich sind.

Weiterhin unterscheidet sich die Ausbildung gem. den Fig. 8 bis 11 auch dadurch nicht nur von den vorstehend beschriebenen Ausgestaltungen, sondern ganz allgemein zu Tragplatten-bzw. Tragschalenausführungen von Sortern im Stand der Technik, daß die Tragplatten 1 jeweils i.w. aus einem gehäuseartigen Hohlkörper 35 aus einem widerstandsfähigen Kunststoffmaterial wie insb./vorzugsweise glasfaserverstärktem Kunststoff (GFK) bestehen, wobei der Hohlraum 36 des Hohlkörpers 35 mit geschäumtem Polystyrol gefüllt ist, so daß die Tragplatten 1 selbst bei großen Abmessungen (wie insb. auch mit relativ großer Breite) zwar einerseits außerordentlich leicht sind, aber dennoch ein hohes Widerstandsmoment aufweisen, und daher ggf. auch mit relativ schweren Stückgutteilen problemlos beschickt werden können. Wie aus den Fig. 8 bis 11 erkennbar ist, sind die Tragplatten 1 in ihrem mittleren Abschnitt gegenüber den Randabschnitten erheblich verdickt, wobei allerdings auch diese mit Polystyrol ausgeschäumt sind.

Es sei noch darauf verwiesen, daß die Oberfläche, also die Tragplatte 1' der Tragplatten 1 mit zahlreichen Rippen 38 versehen ist. die verhindern, daß es bei Feuchte, wie sie durch Niederschläge, nasses Stückgut oder ggf. auch Kondensation auftreten kann, zu starken Adhäsionskräften zwischen Stückgut und der (glatten) Tragfläche 1' kommt, welche im Stand der Technik ein problemloses Arbeiten von Sortern häufig in erheblicher Weise nachteilig beeinträchtigt haben.

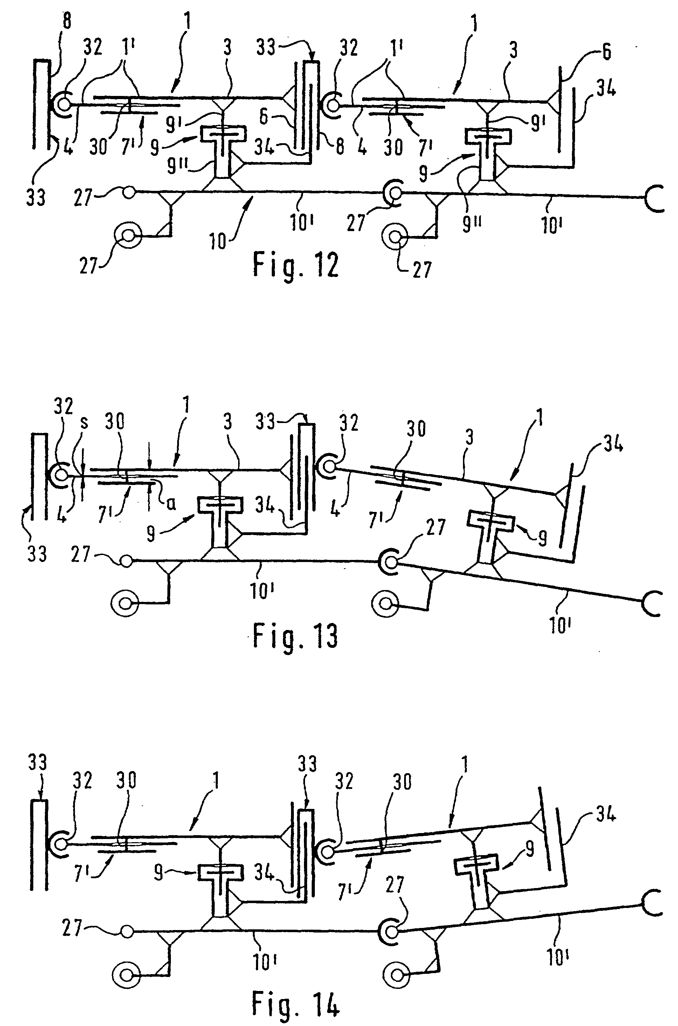

Die Fig. 12 ff. zeigen eine besonders bevorzugte Variante in einer stark schematisierten Darstellung, wobei auch hier für gleiche oder gleichwirkende Teile die gleichen Bezugszeichen wie bei den eingangs beschriebenen Ausgestaltungen verwendet worden sind. Diese Ausgestaltungen sind insb. für eine Förderbahn bestimmt, die an wenigstens einem Abschnitt um eine Horizontalachse vertikal gekrümmt ist. Dabei ist der untere Tragplattenabschnitt 4 einer Tragplatte 1 jeweils an seinem dem Gleit- und Gelenkelement 7' abgekehrten Ende über ein Kugelgelenk bzw. ein Scharniergelenk 32 mit horizontaler Schwenkachse an eine als Gleitschuh od. dgl. ausgebildete Gleiteinheit 33 angelenkt, die über ein von ihr gleitbar aufgenommenes Stützelement 34 mit der benachbarten Stützeinrichtung 9 verbunden ist.

Fig. 12 zeigt eine solche Ausbildung im Bereich eines geraden, nicht gekrümmten Streckenabschnittes, während Fig. 13 zwei einander benachbarte Förderelement im Bereich einer konvexen Kurve und Fig. 14 im Bereich einer konkaven Kurve zeigt.

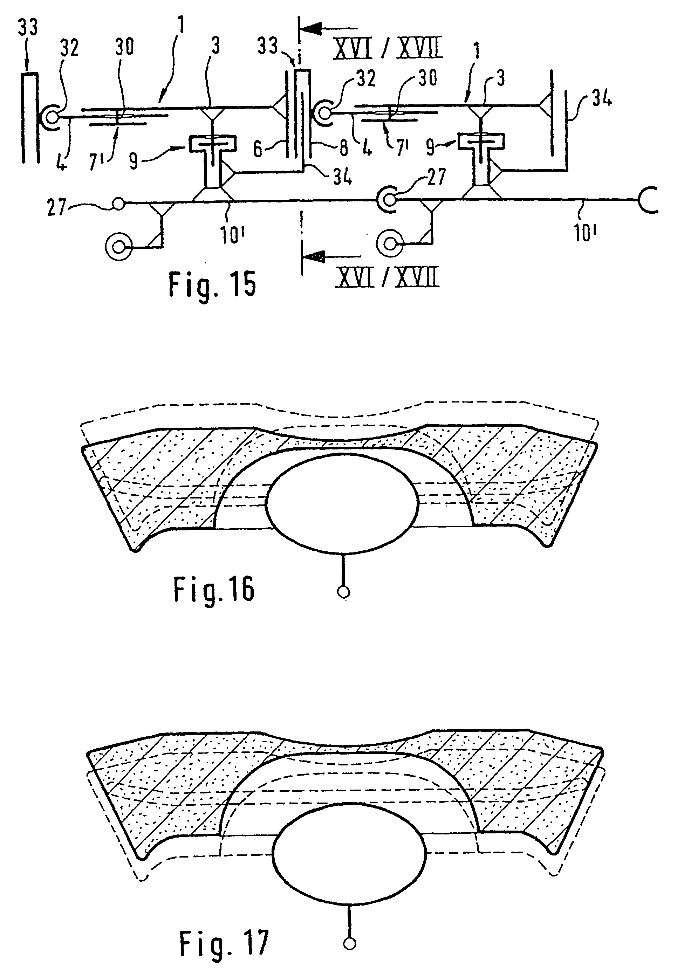

Aus den Fig. 16 und 17 (in der Zeichnung Fig. 15 zugeordnet, deren Darstellung Fig. 12 entspricht) ist die Verformung des Förderstrangs in Längsrichtung gesehen bei einer konvexen Kurve (Fig. 16) bzw. einer konkaven Kurve (Fig. 17) an der Schnittstelle XVI/XVII-XVI/XVII in Fig. 15 verdeutlicht.

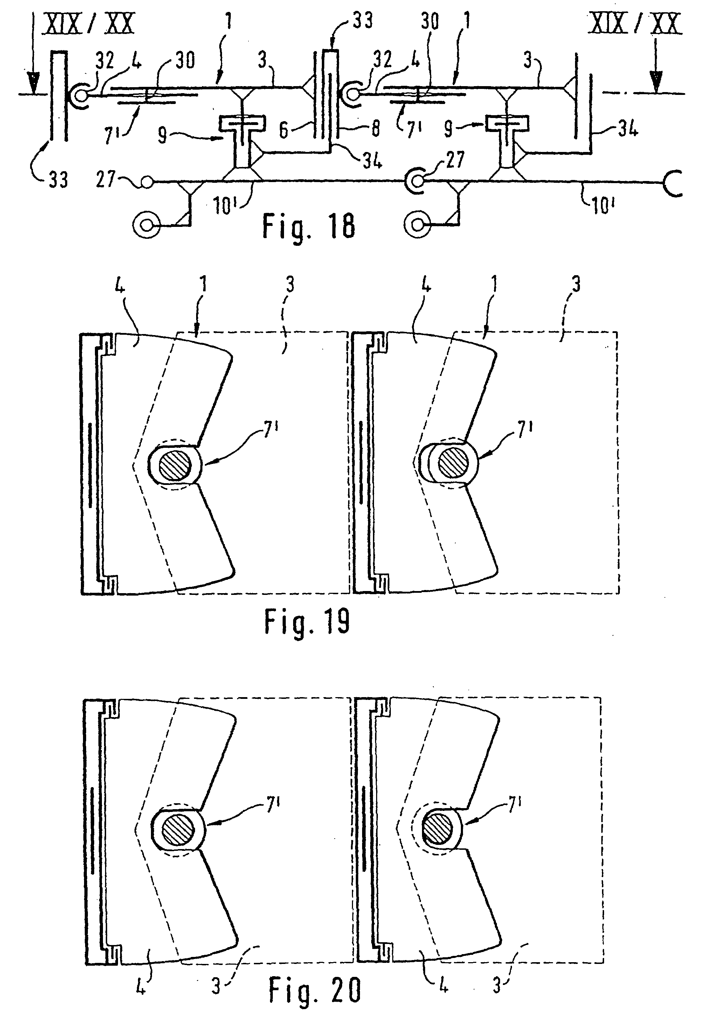

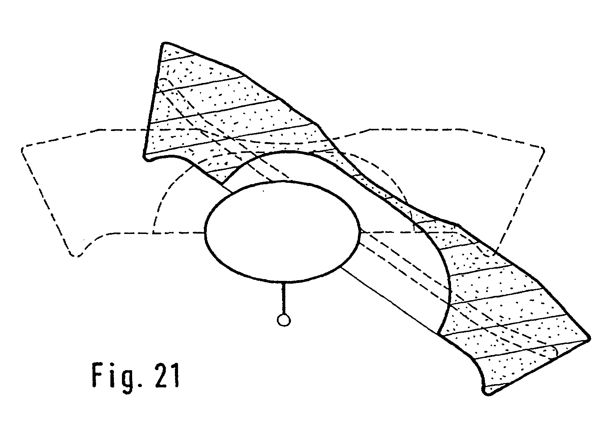

Die Fig. 19 und 20 zeigen in Zuordnung zu Fig. 18, die wiederum den Fig. 12 bzw. 15 enspricht, in einer Schnitt-Draufsicht gem. der Schnittlinie XIX/XX-XIX/XX in Fig. 18 das Verhalten eines derartigen Förderstranges gleichsam in der Draufsicht, und zwar in Fig. 19 bei einer konvexen Kurve und in Fig. 20 bei einer konkaven Kurve, während Fig. 21 in einer ebenfalls schematisierten Schnittansicht eine den Fig. 16 bzw. 17 entsprechende Darstellung beim Kippen (in der Zeichnungsebene) nach rechts zeigt.

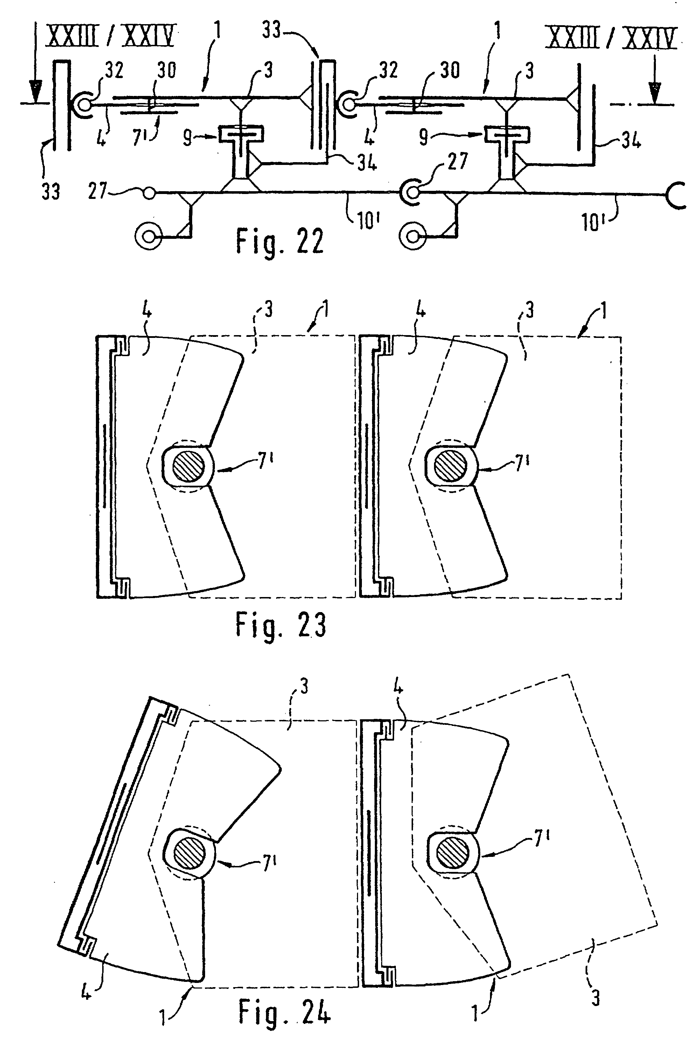

Die Fig. 23 bzw. 24 zeigen unter Zuordnung zu Fig. 22, die wiederum den Fig. 12 bzw. 15 bzw. 18 entspricht, gleichsam eine Schnitt-Draufsicht in Richtung der Schnittlinie XXIII/XXIV-XXIII/XXIV in Fig. 22, und zwar auf einem linearen Förderabschnitt (Fig. 23) bzw. in einem horizontal gekrümmten Förderabschnitt (Fig. 24).

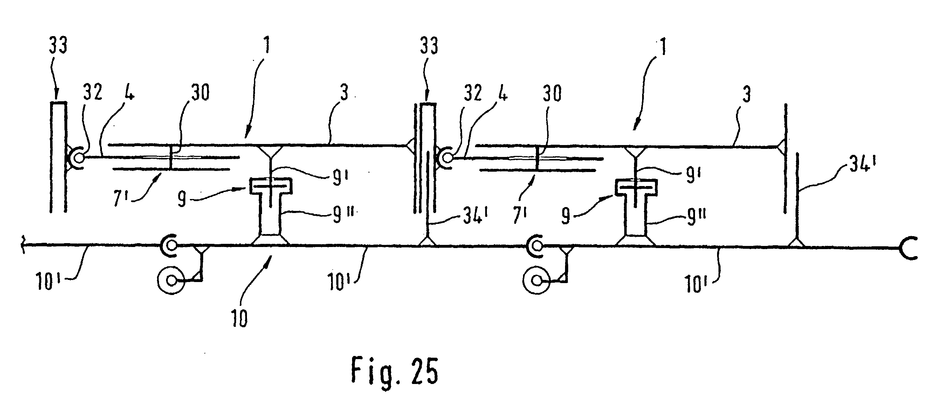

Schließlich zeigt Fig. 25 eine Variante in einer Fig. 12 (bzw. 18 bzw. 22) entsprechenden Darstellung, die sich von den vorgenannten Ausbildungen darin unterscheidet, daß das gleichsam einen "Fixpunkt" bildende Stützelement 34' nicht an der Stützeinrichtung 9 abgestützt, sondern unmittelbar jeweils zu einem Glied 10' der Stützkette 10 geführt ist.

### BEZUGSZEICHENLISTE

- 1: Tragplatte
- 1': Tragplatte
- 2: Trennfuge
- 3: oberer Tragplattenabschnitt
- 3': vorderer Rand (von 3 bzw. 1)
- 3'': hinterer Rand (von 3 bzw. 1)
- 4: unterer Tragplattenabschnitt
- 4': hinterer Rand (von 4 bzw. 1)
- 5: Stückgutteil
- 6: Stirnwand (von 3)
- 7 bzw. 7': Führung (an 3, für 4) bzw. Gleit- und Gelenkelement (an 9')
- 8: Stirnwand (von 4)
- 9: Stützeinrichtung
- 9': oberer Stützabschnitt (von 9)
- 9": unterer Stützabschnitt (von 9)
- 10: Stützkette
- 10': Glied (von 10)
- 11: Arme (von 10)
- 12: Rollen
- 13: Führungsschienen
- 14: Schwert
- 15: Förderrichtung
- 16: Kippachse
- 17: Langloch (von 9')
- 18: Zapfen
- 19: Traverse
- 20: Kopfbolzen
- 20': Kopf (von 20)
- 21: Nocken
- 22: Weiche
- 23: Schwenkbolzen
- 24: Ansatz (von 6, 8)
- 25: Sicherungsringe
- 26: Gelenk
- 26': Gelenkachse
- 27: horizontale Schwenkachsen (von 10)

- 28: vertikale Schwenkachsen (von 10)
- 29: Langloch (in 8, für 23; s. Fig. 7a, 7b)
- 30: Schwenkbolzen (von 7')
- 31: Flansch (an 30)
- 32: Schamiergelenk
- 33: Gleiteinheit (Gleitschuh)
- 34, 34': Stützelement (für 33; an 9" bzw. 10')
- 35: gehäuseartiger Hohlkörper (von 1)
- 36: Hohlraum (von 35)
- 37: Leichtstoff (geschäumtes Polystyrol)
- 38: Rippen (von 1')
- 39: Seitenborde
- 40: Lenker

## Patentansprüche

1. Gliederförderer, insb. zum Transport und Sortieren von Stückgutteilen (5), mit einem längs einer in sich geschlossenen Förderbahn umlaufenden, antreibbaren Fördertrum, welches aus einer Vielzahl von einander in Förderrichtung (15) eng benachbart nachgeordneten Tragplatten (1) besteht, die über Stützeinrichtungen (9) an einer längs der Förderbahn geführten, endlosen, antreibbaren Stützkette (10) abgestützt sind, deren Glieder (10') um vertikale und ggf. horizontale Schwenkachsen (28 bzw. 27) relativ zueinander verschwenkbar sind, **dadurch gekennzeichnet, daß** die Tragplatten (1) i.w. aus einem gehäuseartigen Hohlkörper (35) aus einem widerstandsfähigen Kunststoffmaterial, insb. glasfaserverstärktem Kunststoff (GFK), bestehen.

2. Förderer nach Anspruch 1, **dadurch gekennzeichnet, daß** der Hohlraum (36) des Hohlkörpers (35) mit einem Leichtstoff gefüllt ist.

3. Förderer nach Anspruch 2, **dadurch gekennzeichnet, daß** der Leichtstoff geschäumter Kunststoff, insb. Polystyrol od.dgl. ist.

4. Förderer nach einem oder mehreren der Ansprüche 1 bis 3, **dadurch gekennzeichnet, daß** nur der obere Tragplattenabschnitt (3) als (ggf. mit Leichtstoff gefüllter) Hohlkörper (35) ausgebildet ist.

5. Förderer nach einem oder mehreren der Ansprüche 1 bis 4, **dadurch gekennzeichnet, daß** insb. bzw. i.w. nur der beiderseits der Längsmittelachse unterhalb der Tragfläche (1') befindliche Abschnitt der Tragplatte (1) jeweils als (ggf. mit Leichtstoff gefüllter) Hohlkörper (35) ausgebildet ist.

6. Förderer nach einem oder mehreren der vorhergehenden Ansprüche, **dadurch gekennzeichnet, daß** die Tragfläche (1') mit Rippen (38), Noppen od.dgl. versehen ist.

## Claims

1. An apron conveyor, more particularly for the transport and sorting of unit load parts (5), comprising a driveable conveyor run which rotates along an endless conveyor path and which consists of a plurality of carrier plates (1) disposed closely adjacent one another successively in the conveying direction (15), and which are supported by way of support devices (9) on an endless driveable support chain (10) which is guided along the conveyor path and the links (10') of which are pivotable relatively to one another about vertical and, if required, horizontal pivot axes (28 and 27 respectively), **characterised in that** the support plates (1) consists substantially of a hollow member (35) in the form of a housing made from a resistant plastic material, more particularly glass fibre reinforced plastic.

2. A conveyor according to claim 1, **characterised in that** the cavity (36) of the hollow member (35) is filled with a lightweight material.

3. A conveyor according to claim 2, **characterised in that** the lightweight material is plastic foam, more particularly polystyrene or the like.

4. A conveyor according to one or more of claims 1 to 3, **characterised in that** only the top carrier plate portion (3) is constructed as a hollow member (35) (filled with lightweight material if required).

5. A conveyor according to one or more of claims 1 to 4, **characterised in that** particularly or substantially only the portion of the carrier plate (1) situated on either side of the central longitudinal axis beneath the carrier surface (1') is in each case constructed as a hollow member (35) (filled with lightweight material if required).

6. A conveyor according to one or more of the preceding claims, **characterised in that** the carrier surface (1') is provided with ribs (38), projections or the like.

## Revendications

1. Transporteur à maillons, en particulier pour transporter et trier des marchandises au détail (5), comportant un brin de transport susceptible d'être entraîné et circulant le long d'une voie de transport fermée sur elle-même, qui est constitué par une multitude de plaques porteuses (1) agencées étroitement voisines les unes des autres en direction de transport (15), qui sont appuyées via des dispositifs d'appui (9) sur une chaîne d'appui (10) sans fin guidée le long de la voie de transport et susceptible d'être entraînée, dont les maillons (10') peuvent basculer les uns par rapport aux autres autour d'axes de basculement verticaux et le cas échéant horizontaux (28 ou 27), **caractérisé en ce que** les plaques porteuses (1) sont en outre constituées essentiellement par un corps creux (35) en forme de boîtier en matière plastique résistante, en particulier en matière plastique renforcée par des fibres de verre.

2. Transporteur selon la revendication 1, **caractérisé en ce que** la cavité (36) du corps creux (35) est remplie avec une matière légère.

3. Transporteur selon la revendication 2, **caractérisé en ce que** la matière légère est une matière plastique en mousse, en particulier en polystyrène ou analogue.

4. Transporteur selon l'une ou plusieurs des revendications 1 à 3, **caractérisé en ce que** seul le tronçon de plaque supérieur (3) est réalisé sous la forme du corps creux (35) (le cas échéant rempli avec la matière légère).

5. Transporteur selon l'une ou plusieurs des revendications 1 à 4, **caractérisé en ce qu'**en particulier ou essentiellement seul le tronçon de plaque porteuse (1), situé des deux côtés de l'axe médian longitudinal au-dessous de la surface porteuse (1'), est réalisé sous la forme du corps creux (35) (rempli le cas échéant avec la matière légère).

6. Transporteur selon l'une ou plusieurs des revendications précédentes, **caractérisé en ce que** la surface porteuse (1') est pourvue de nervures (38), de boutons ou similaires.
